# EUROPEAN PATENT SPECIFICATION

(11) **EP 3 186 169 B1**
(45) Date of publication and mention of the grant of the patent: **29.08.2018**
(21) Application number: 15739622.7
(22) Date of filing: 23.07.2015
(51) Int. Cl.: B65D 85/804

(54) **PACK AND METHOD FOR PREPARING BEVERAGES**
VERPACKUNG UND METHODE ZUR ZUBEREITUNG VON GETRÄNKEN
SACHET ET PROCÉDÉ POUR LA PRÉPARATION DE BOISSONS

(30) Priority: 04.08.2014 EP 14179635
(43) Date of publication of application: 05.07.2017
(73) Proprietor: Nestec S.A., 1800 Vevey (CH)
(72) Inventor: VIVIER, Valérie, F-01220 Divonne les Bains (FR); DUBESSET, Claire, CH-1135 Denens (CH); BUTSCHER, Silvio, CH-2054 Chezard-St-Martin (CH)
(74) Representative: Navarro Fernández, Maria Isabel
(86) International application number: PCT/EP2015/066823
(87) International publication number: WO 2016/020197

(56) References cited:
- WO-A1-2011/024103
- WO-A1-2011/054402
- WO-A1-2012/175985
- GB-A- 2 374 856

## Description

### Field of the invention

The present invention relates to packs and machines for the preparation of foods or beverages from packs comprising a food or beverage ingredient.

### Background of the invention

It is known to prepare beverages by introducing a capsule containing a beverage making ingredient, such as ground coffee or instant coffee, in a beverage dispensing machine and injecting water into the capsule. The beverage making ingredient is extracted or dissolved into water to form the beverage. The beverage flows out of the capsule through a suitable outlet.

Different capsules have been developed in the past that can differentiate at least by the nature of the capsule body used for storing the food or beverage ingredient. Whereas most of the capsules are made of a rigid body or semi-rigid body (e.g. made though injection moulding, thermoforming, deep drawing, ...) flexible types of packs or sachets can be made out of foil materials. Flexible packs have generally the advantage to semi-rigid and rigid capsules that less amount of material is used to pack the product which leads to overall less production cost and lower life cycle impact shown in several life-cycle assessments.

WO 99/05044, GB 2 374 856 and WO 2012/175985 describe such a flexible pack made of two sheets of flexible air-and liquid-impermeable material bonded on theirs edges to define an inner volume for storing the beverage ingredient. The pack comprises an inlet nozzle at its top for introducing water that is mixed with the beverage ingredient inside the inner volume. The beverage is evacuated through a beverage outlet at the bottom of the sachet. The outlet is created further to bursting of the pack under the pressure of water introduced in the sachet. Generally the outlet is created due to the separation of the bottom edges of the flexible sheets further to the effect of heat or pressure in the sachet. According to a particular embodiment a spout can be introduced at the bottom of the pack : in that embodiment, the bottom edges of the flexible sheets do not separate and the beverage is evacuated by the spout.

These flexible sachets present drawbacks. Generally the opening of the beverage outlet is obtained by increase of pressure inside the sachet. Yet this pressure increase is not recommended for the preparation of some beverages because it creates bubbles at the surface of the beverage ; for example it is not desired for the preparation of tea. Besides there can be a risk that the packages may not rupture at the desired pressure and that it can finally opens up in an uncontrollable explosion. For this reason the apparatus comprises means for totally enclosing the pack in the machine during beverage preparation and avoid damages or injuries for the operator.

WO 2011/024103 describes a pack for preparing a beverage defining an inner volume for storing the beverage ingredient. The inner volume is closed at its top by a rigid piece that integrates the water inlet and the beverage outlet. Such a pack only enables the preparation of flat beverages obtained by the circulation of water through a food ingredient like roast and ground coffee without pressure. No multi-components beverage can be produced from such a pack.

WO 2011/054402 describes a capsule with an interior space comprising a first beverage ingredient and a floating insert, said floating insert comprising a second beverage ingredient. Dual-layered beverages can be obtained by introducing water in the interior space to produce a first component of the beverage and then destroying the floating insert to produce a second component of the beverage. Such a capsule is complex in terms of manufacturing. During the beverage preparation the capsule is horizontally oriented and consequently beverage is not freely evacuated from the interior space : for this reason the machine comprises a piston to empty the capsule.

It is now proposed a new pack for the preparation of a food or beverage that improves the above problems in terms of manufacturing, beverage preparation simplicity and cleanliness leading to an optimal overall beverage quality.

Moreover the present invention aims to propose a range of flexible packs that can be used for preparing different types beverages from at least two different beverage components, said components being separately stored in the packs.

### Summary of the invention

According to a first aspect, the invention concerns a pack with an inner volume in which at least two different food or beverage ingredients are stored and in which a beverage is produced when water is introduced inside,
said inner volume being defined by sheets of material joined to one another at their edges and said inner volume presenting a generally plane shape defining a plane (P) vertically oriented during beverage production,
said pack comprising at least one inlet for introducing water in the inner volume and at least one outlet for delivering the beverage from said inner volume, said water inlet and said beverage outlet being positioned at the bottom of the pack and being at least partially positioned between two joined edges of the sheets of material, and
wherein the inner volume includes a plurality of compartments, the compartments being separated by at least one releasable or separable bond, and
wherein the water inlet and the water outlet are positioned between two joined edges of the sheets of material so that they both establish fluid communication within the same compartment.

Preferably the pack comprises two sheets joined to one another to define the inner volume. As a consequence the pack looks like a pouch or sachet. The sheets are preferably flexible water impermeable sheets. Consequently the pack itself is substantially flexible. By flexible, it is meant that the sheets can be bent easily. The resulting pack can be bent also ; it is soft and can be deformed contrary to rigid containers. The flexible sheet material can be plastic laminates, metallised foil or alufoil or fibre base material. According to the invention the two sheets can be formed of one single sheet folded in half and joined at its free edges.

The pack presents a generally plane shape that is essentially vertically oriented during beverage production.

According to a specific embodiment the pack can comprise more than two sheets, in particular to increase the size of the inner volume. Other sheets can be joined to the two first sheets that defining the inner volume and the generally plane shape according to plane (P) ; said other sheets creates a doypack shape for the inner volume. In such a specific embodiment the water inlet and the beverage outlet are at least partially positioned between two joined edges of the two first sheets of material that define the generally plane shape (P) of the pack.

Internally the beverage outlet is preferably configured so that it delivers the beverage as a free flow once it is opened. The beverage can flow from the outlet by simple gravity fall. The tube creates a communication between the inner volume and outside. An advantage of the outlet of the pack of the present invention is that there is no need to implement a particular connection between the beverage outlet and the beverage machine when a beverage is produced e.g. for directing the flow of beverage delivered at the outlet. The beverage can flow from the pack beverage outlet directly in a drinking cup.

The pack comprises at least one inlet for introducing water in the inner volume and at least one outlet for delivering the beverage from said inner volume, said water inlet and said beverage outlet being positioned at the bottom of the pack and being at least partially positioned between two joined edges of the sheets of material, the external end of the water inlet being oriented essentially perpendicularly to the plane (P) defined by the inner volume, whereas the beverage outlet is a tube extending essentially vertically from the inner volume.

According to this configuration the water inlet and the beverage outlet are essentially perpendicularly oriented one to the other. Consequently the inlet and the outlet emerge on different sides of the pack. This configuration limits the contamination risk of the means for introducing water in the water inlet by the beverage dispensed by the beverage outlet.

In the present invention the inlet and the outlet can be made in one single insert or can be two separate inserts separately positioned in the pack.

In the present invention the insert(s) is(are) preferably rigid. Preferably the inserts are made of a rigid plastic material. This plastic material can be selected in the list of : polypropylene, polyethylene, polyethylene terephthalate and polylactic acid. According to a less preferred embodiment the insert can be made out of a metal like aluminium or tin-plate. The insert(s) can be injection molded.

According to the preferred embodiment the insert comprising the water inlet is positioned in joined bottom edges of the sheets of material so that the water inlet is closed by one sheet of material defining the inner volume.

According to another less preferred embodiment the water inlet insert can be positioned in joined bottom edges so that the water inlet is not closed by one sheet of material defining the inner volume. In that case the water inlet insert is only partially positioned between two joined edges of the sheets of material.

Generally, the insert comprising the beverage outlet is positioned in joined bottom edges of the sheets of material so that the external end of the beverage outlet is positioned under the joined bottom edges of the sheets of material. Preferably the beverage outlet is not covered by the sheet. Yet it can be visually hidden by a part of the sheet e.g. by a skirt of the sheet.

According to the preferred embodiment, the pack comprises one single insert including the water inlet and the beverage outlet, said single insert being positioned at the bottom of the pack and being partially positioned between two joined edges of the sheets of material.

Preferably, the single insert is positioned in joined bottom edges so that the water inlet is closed by one sheet of material defining the inner volume. The external end of the beverage outlet is positioned under the joined bottom edges of the sheets of material.

Less preferably the single insert can be positioned in joined bottom edges so that the water inlet is not closed by one sheet of material defining the inner volume. In that case the insert is only partially positioned between two joined edges of the sheets of material.

In general the single insert is positioned at or next to the middle of the bottom of the pack. It can also be positioned in the corner of the pack when the latter presents a corner.

In the pack the water inlet and the beverage outlet of the pack are both simultaneously included in said same single insert. This feature covers the fact that the water inlet and the beverage outlet are part of the same insert piece in the pack. Yet this insert can be produced by the association of several parts before the complete piece is used for manufacturing the pack. In particular different parts can be attached, e.g. clipped, together to form the final single insert before said single insert is used for manufacturing the pack.

Preferably the single insert of the pack presents a shape for cooperating with the pack receiving area of a beverage production machine. In particular it can present a shape configured for sliding in the slot of the receiving area of a beverage production machine like an iron shape.

According to one preferred mode the pack can be made of only one flexible material sheet, said sheet being folded at the top of the pack and bonded on its edges to define the inner volume, the bottom joined edge including the insert. This embodiment constitutes a particularly easy way to manufacture the pack since it requires the cutting of only one piece of sheet - most preferably according to a rectangular shape - and its folding to create the inner volume for the food or beverage ingredient. The insert(s) can be introduced in the bottom edge during the sealing of the edges.

According to a less preferred mode the pack can be made of two flexible material sheets, said sheets being bonded on their edges to define the inner volume, the bottom joined edges including the insert. The insert(s) can be introduced in the bottom edges during the sealing of these edges, two other side edges of the pack can be bonded so that the inner volume is defined and beverage ingredient can be introduced in said inner volume. Finally the last edges can be bonded to close the inner volume.

The insert(s) can be positioned at any place at the bottom of the pack between the both lateral sides of the bottom ; it(they) can be positioned at a bottom lateral side in particular a corner if the pack is globally rectangular or at any place between the corners.

According to the present invention the food or beverage ingredient of the pack can be comprised within the list of : soups, fruit juices, vegetable juices, bouillons, coffee, chocolate, tea, milk or creamer, smoothies, purees, coulis, creams or a combination thereof.

The food or beverage ingredient can be a soluble food or beverage ingredient. Preferably the food or beverage ingredient is a soluble food or beverage ingredient selected in the list of :
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid pieces.

The food or beverage ingredient can also be an infusable food or beverage ingredient like a roast and ground coffee or tea leaves. In that embodiment water extracts the infusable ingredient.

As mentioned above the insert including the water inlet is enclosed in the pack by the sheet(s) of material that defines the inner volume of the pack.

According to a less preferred embodiment the water inlet can be positioned in the pack so that it is almost totally essentially vertically oriented during beverage production.

In the present invention the external end of the water inlet represents the end of the water inlet channel that cooperates with a water supply at the outside of the pack whereas the internal end of the water inlet represents the end of the water inlet channel that delivers water inside the pack.

According to the preferred embodiment the external end of the water inlet is oriented essentially perpendicularly to the plane (P) defined by the inner volume. Accordingly the water inlet is at least partially essentially horizontally oriented during beverage production.

In said last embodiment the external end of the water inlet is preferably covered by said sheet of material. Consequently the same piece of material can be used to simultaneously create the inner volume of the pack, close the water inlet and protect the external end of the water end. Due to the enclosure of the beverage inlet in the pack there is no need for a particular membrane for closing the water inlet. The invention provides a pack that is easy to manufacture and guarantees hygienic and shelf life protection of the food and beverage ingredient and the produced beverage.

Preferably the single insert presents ribs on its external surface for improving the adhesion with the flexible material sheet during sealing. In particular a raising edge can surround the water inlet so as to improve air and water tightness around it.

Preferably the insert is configured so that the longitudinal axis of the water inlet channel at its internal end is almost comprised in the vertically oriented plane P.

Preferably the water inlet can be configured so that the direction of the water flow in the external end of the water inlet is almost perpendicular to the direction of the water flow in the internal end of the water inlet. In this embodiment the internal design of the water inlet enables a globally perpendicular change of orientation of the water flow from the external end of the water inlet (that faces the external part of the pack) to the internal end of the water inlet (that faces the internal part of the pack).

In a particular mode the external end of the water inlet can comprise an inlet chamber which comprises an evacuation end, said evacuation end being an injection hole configured for directing water in the inner volume of the pack in a direction almost perpendicular to the inlet chamber longitudinal axis. Preferably the inlet chamber is globally horizontally oriented. This chamber is usually configured for receiving a hollow needle for injecting water. It generally presents a circular section. This chamber presents the advantage of creating a distance between the end of the hollow needle and the inner volume which stores the beverage ingredient and consequently avoids the contamination of the needle. Most preferably the chamber evacuation end is a hole pierced in the lateral wall of the chamber.

According to one particular embodiment the water inlet is configured for introducing water under the form of a jet in the inner volume of the pack. By jet it is understood a stream of liquid that comes out of the water inlet and in the inner volume of the pack quickly and with force. Then the water inlet is configured for introducing water in the inner volume of the pack with a high velocity. Preferably the water inlet is configured for introducing a water jet in the inner volume of the pack, said water jet presenting a velocity of at least about 20 m/s, preferably at least 30 m/s. According to said first embodiment the water inlet is configured for transforming the pressurized water introduced by a beverage machine in the pack in a high velocity water jet in the inner volume of the pack. Such a configuration can be obtained by placing a constriction in the water path in the water inlet to reduce the size of the section of the water inlet. Due to the small surface of the inlet section pressurized creates a jet of water in the inner volume.

In general the water inlet comprises a hole presenting a transverse section with a surface area equivalent to the surface of a circular surface of diameter of at most 1 mm, preferably at least 0,24 mm.

The velocity for water emerging from the injection hole usually depends from the pressure of the water introduce at the water inlet. The invention generally applies for water pressurised between 2 and 10 bar, preferably of about 7 bar. For such values of pressurized water the water inlet generally comprises an injection hole presenting a transverse section with a surface area equivalent to the surface of a circular surface of diameter comprised between 0,2 and 0,8 mm, preferably between 0,3 and 0,5 mm and even more preferably of about 0,4 mm.

But when water is pressurized at more than 11 bar the water inlet preferably comprises an injection hole presenting a transverse section with a surface area equivalent to the surface of a circular surface of diameter comprised between 0,5 and 1,5 mm, preferably of about 1 mm.

The small surface of the injection hole presents the advantage of avoiding any back flow of liquid contained in the inner volume of the pack through the water inlet.

For the same diluent supply pressure the surface of the diluent injection hole can vary according to the nature of the food and beverage ingredient inside the pack. In particular when the ingredient is difficult to dissolve a smaller injection hole creates a jet with a higher velocity which improves agitation and dissolution in the pack.

Preferably the pack presents a plane shape oriented along a plane essentially vertically oriented during beverage production and the water inlet orientates the jet of water in a direction comprised in said plane. The water jet introduced from the bottom into the pack is developing into circular and/or spiral movements creating turbulences, frictions and high contact surfaces between the water molecules and the product particles. In average the water molecules have several turns within the sachet until they leave the sachet with the beverage. Packs with single insert placed in the corner of an essentially rectangular pack also improve reconstitution.

This particular embodiment with creation of a jet is particularly interesting for packs comprising soluble beverage ingredients.

According to another particular embodiment the creation of a water jet in the pack is not desirable, for example for packs comprising infusable ingredients. Consequently the size of the water injection hole can be configured to avoid a jet in the inner volume of the pack.

According to the preferred embodiment of the invention, before beverage preparation step, the beverage outlet is closed at its end. Generally the beverage outlet is closed by manufacturing and is configured for being opened at beverage production step. By "closed by manufacturing" it is meant that the pack is manufactured with a closed beverage outlet. This closure guarantees hygienic and shelf life protection.

According to said embodiment the beverage outlet can be closed by a plug configured for being removed from the beverage outlet to open it at beverage production and said plug comprising a bond attached to the pack, preferably to the single insert, for maintaining the plug attached to the pack after the opening of the beverage outlet, said plug being positioned under the joined bottom edges of the sheets of material.

Since the beverage outlet is closed by a plug, said plug comprising means for maintaining it attached to the pack after the opening of the beverage outlet, the plug does not fall in the beverage during its production. The means for maintaining the plug attached to the pack is usually a bond, said bond is preferably attached to the single insert.

Preferably the plug is part the single insert comprising the beverage outlet and the water inlet. Preferably the beverage outlet is a pipe and the connection between said pipe and the plug presents a mechanical weakness. This mechanical weakness can be a narrowing so that it can be made easy to cut or tear off the plug with a beverage outlet opening device of a beverage preparation machine. This reduced transversal section of the connection between the plug and the beverage outlet pipe creates a weakness. As a consequence the fact of pulling on the plug, facilitates the tearing of the material, of which the single insert is made of, at the level of this connection. The plug can be pulled according to a downwardly oriented direction or a laterally oriented direction or a combination of these both directions.

Preferably the connection between the pipe and the plug presents a smaller section than the plug upper surface and preferably smaller than the pipe section. Since the plug upper surface is larger than the connection section, it provides a surface to have a hold to tear the plug or to anchor a pulling device, for example to anchor a tearing device like the teeth of a fork.

Preferably the bond is attached to the single insert for maintaining the plug attached to the pack after the opening of the beverage outlet is configured for being bent. Consequently after being bent the plug remains away from the beverage outlet. According to that preference the bond is usually made of plastic. The bond can be made so thin that it is flexible. Once detached from the plug it can be moved away from the beverage outlet easily by a bond retaining device of a beverage preparation machine. According to a particular embodiment the plastic bond can present a notch in order to facilitate bending. So the bending of the bond by the retaining device of the machine is facilitated and the bond remains bent even if it is not retained by the bond retaining device of the machine. Preferably the notch is positioned close to the point of attachment of the bond to the single insert.

Preferably the bond is part of the single insert. According to the preferred embodiment the single insert comprises the water inlet, the beverage outlet, the plug and the bond of the plug. The single insert is preferably injection molded. In particular when the insert is injection molded, the design of the injection molded insert comprises the plug and the bond. This injection moulding of the insert including the water inlet, the beverage outlet, the plug and the bond in one single piece enables again to reach several aims with the use of only one material : the plastic for producing the insert comprising the water inlet and the beverage outlet is used to close the external end of the beverage outlet.

According to the present invention, the inner volume includes a plurality of compartments, said compartments being separated by at least one releasable or separable bond, and the water inlet and the water outlet are positioned between two joined edges of the sheets of material so that they both establish fluid communication within the same compartment.

Generally the pack of the invention comprises two compartments. Yet packs according to the invention can present inner volumes designed with more than two compartments.

Usually at least two of the compartments comprise different beverage ingredients. Preferably two next sided compartments comprise different beverage ingredients.

The water inlet and the water outlet are both positioned in the edges bounding the same compartment. Consequently, implicitly, before the pack is used there is no inlet and outlet in the other compartments of the pack.

The water inlet and the water outlet create fluid communication with the compartment comprising the ingredient that must be mixed with water and dispensed first from the pack to produce the beverage.

According to one first mode the inner volume includes a plurality of compartments, said compartments being separated by at least one releasable or separable bond extending across the inner volume between two parts of the joined edges of the sheets of material.

In said first mode the at least one releasable or separable bond can present different designs either straight or round or partly straight and round. The design of the at least one releasable or separable bond can be straight lines separating the inner volume and relatively square compartments either vertically or horizontally oriented when the pack is used. The design of the at least one releasable or separable bond can be a half circle or a zigzag. The design of the bond can depend on the volume of beverage ingredient to be stored inside or from the difficulty for creating the bond in the pack. The design of the bond can also be configured for improving the preparation of the beverage inside the compartment or to facilitate the separation of the bond.

According to one second mode at least one of the compartments is an insert, said insert being freely movable inside the inner volume .

In this mode the inner volume defined by the bonded edges of the sheets of material surrounds the insert that forms the second compartment. This second compartment can surround a second insert that forms a third compartment.

Depending on the nature of the ingredient stored in the compartments and on the type of beverage produced from the pack, the releasable or separable bond can be of different natures.

According to one embodiment the at least one releasable or separable bond can be made of a water dissolvable material. Usually such a bond is made of a soluble and edible film placed on the internal surface of at least one of the sheets so that the two facing surfaces of the sheets attached together. Such a film can be made of hydroxypropyl methylcellulose, propylene glycol, citric acid and modified food starch.

Such a bond is convenient for storing powder ingredient in the compartments separated by the bond. Preferably such a bond is not used for storing a liquid ingredient comprising water in such content that water could dissolve the bond. Yet a liquid like oil, perfumed oil can be stored in a pack comprising such a bond. A liquid or a paste comprising for example less than 1 % weight water can be stored too.

According to another embodiment the at least one releasable or separable bond can be configured for breaking under pressure exerted on the said bond.

The pressure exerted on the bond can be due to the pressure of water introduced inside the first compartment and building up : the bond is forced apart separating or rupturing the inner surfaces of the compartment and allowing the separated ingredient to mix with one another or allowing water to enter in the second compartment.

The pressure on the bond can be exerted by a consumer before the pack is introduced in the beverage preparation machine for example by pulling the sheets around the bond. The pressure on the bond can be exerted by a device in the machine once the pack is introduced in the machine.

Such a bond is convenient for any type of ingredient either in powder or liquid form.

According to the invention the compartments can comprise and store ingredients of different natures that is powders and liquid concentrates.

The inner volume of the pack stores at least two different food or beverage ingredients. The different ingredients are stored in different compartments. The nature of the ingredient in the different compartments depends on :
- the necessity to store the different ingredients separately,
- the production of a beverage with a visual effect in the cup, for example a layered effect. In this last case, the compartment that does not comprise the water inlet and the water outlet in its edges comprises an ingredient that is released at a delayed time relative to other compartment when water is introduced in the pack to produce beverage.

According to the invention the two joined edges of the sheets of material defining the inner volume of the pack are not releasable or separable.

According to one embodiment, the water inlet can be configured for producing a jet of water in the inner volume, said jet exerting a pressure on the at least one releasable or separable bond.

According to a second aspect the invention concerns a method for the preparation of a food or beverage comprising the steps of :
- providing a pack such as described above and positioning said pack with the inlet and the outlet positioned downwardly,
- injecting water into the pack to mix with the food or beverage ingredient,
- allowing the prepared beverage to escape through the outlet into a receptacle.

According to a specific implementation of the method, if the pack comprises at least one releasable or separable bond configured for breaking under pressure, the method can comprise one short step of externally exerting a pressure on the pack in order to break the at least one releasable or separable bond.

According to one specific mode the customer can be incited to exert manually the pressure on the pack before inserting it in the machine.

Preferably the pressure is exerted by the machine after the pack has been positioned inside the machine.
compartments are separated by a bond, said bond being designed to open a fluid communication between the compartments when interacting with water introduced inside the inner volume,

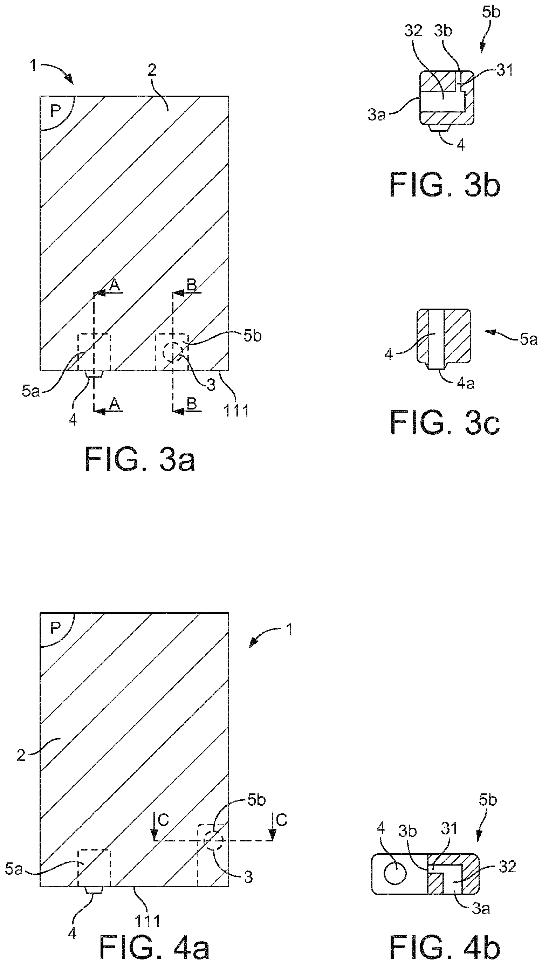

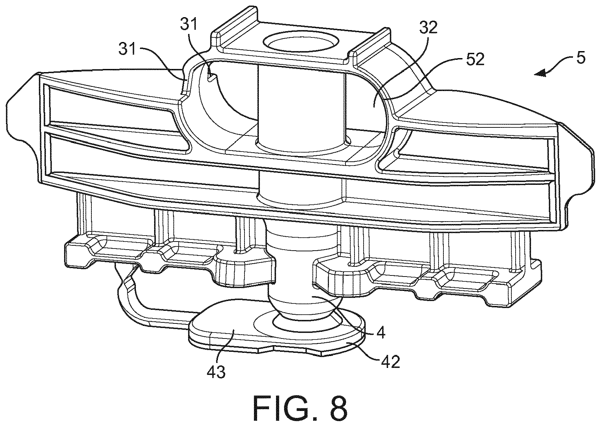

In the present application the terms "bottom", "top", "lateral", "horizontal" and "vertical" are used to describe the relational positioning of features of the invention. These terms should be understood to refer to the pack in its normal orientation when introduced in a beverage preparation machine for the production of a beverage as shown for example in Figures 4 and 8.

According to the invention "next to the bottom" means that both the inlet and the outlet are positioned on the bottom edge of the pack and/or on the bottom part of one of the lateral sides of the package. The invention covers the different variants where both the inlet and the outlet are on the same edge of the pack that is both on the bottom edge or both at the bottom part of a lateral side and where either the outlet or the inlet is on the bottom edge and respectively the inlet or the outlet is at the bottom part of a lateral side of the pack. According to the invention the bottom part of a lateral side of the pack generally corresponds to the part of said lateral side positioned below the middle part of the pack and preferably closer to the bottom part of the pack rather than the middle part of the pack.

In the present invention the term "water" covers any aqueous diluent that can be mixed with a soluble beverage ingredient to prepare a beverage, like water, carbonated water, milk. It is preferably still water.

### Brief description of the drawings

The characteristics and advantages of the invention will be better understood in relation to the following figures, in which :
- Figures 1a, 1b, 1c and Figures 2a, 2b illustrate packs according to the present invention, each pack comprising one single insert,
- Figures 3a, 3b, 3c and Figures 4a, 4b illustrate packs according to the present invention, each pack comprising two inserts,
- Figure 5 illustrates a variant of the pack of Figure 1a,
- Figure 6 illustrates a method for manufacturing a pack according to the present invention,
- Figure 7 illustrate a pack and its insert according to one preferred embodiment of the present invention,
- Figure 8 is a variant of the single insert of Figure 7,
- Figures 9 to 13 illustrate different embodiments of the inner volume of packs according to the present invention,

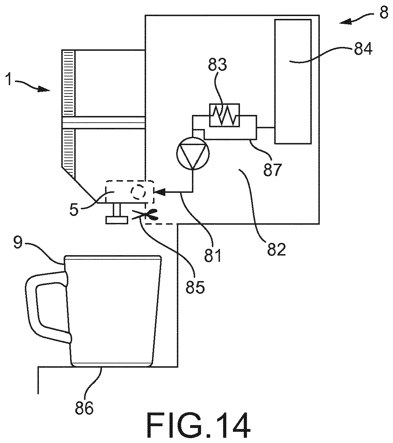

- Figure 14 illustrates the preparation of a beverage with a pack according to the invention.

### Detailed description of the drawings

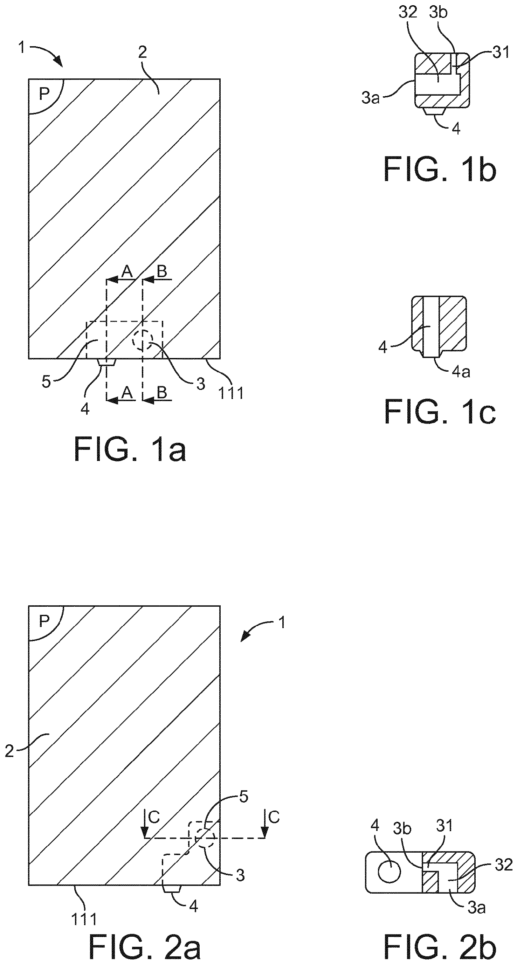

**Figure 1a** is a simplified illustration of pack according to the present invention comprising an inner volume 2 in which a food or beverage ingredient is stored. The pack comprises at its bottom a single insert 5. The dotted lines correspond to the parts of the insert enclosed inside the pack. The insert 5 includes simultaneously a water inlet 3 for introducing water in the inner volume and a beverage outlet 4 for dispensing the beverage or food issued from the mixing of the food or beverage ingredient with water. The pack presents a generally plane shape. It is oriented along a plane P essentially vertically oriented during beverage production as illustrated in the Figure 1a. This plane shape is essentially provided by the material that creates and designs the inner volume 2 of the pack ; this material presents the shape of a sheet. Said sheet provides the plane shape to the pack. In Figure 1a the insert 5 is positioned at the centre of the bottom of the pack, yet it could be positioned at any other position between the two lateral ends of the bottom.

The internal designs of the water inlet and the beverage outlet are respectively illustrated in **Figure 1b****,** which is a view according to section B-B, and **Figure 1c****,** which is a view according to section A-A. Figure 1c shows that the beverage outlet 4 is a straight vertical hole pierced in the insert 5. Preferably the beverage outlet 4 presents a sufficient section so as to enable a free flow of the beverage from the pack. The beverage can then freely flow in a drinking cup placed under the beverage outlet 4. Figure 1b shows that the external end 3a of the water inlet is oriented so as to be closed by the sheet of material that creates and designs the inner volume 2 of the pack. Said external end 3a comprises and inlet chamber 32. Said chamber present an evacuation hole 31 in its lateral upward wall so as to orient the water flow, preferably in the form of a jet, in the inner volume 2 inside the plane P.

The sheet of material that defined the inner volume 2 covers at least the part of the insert 5 so that the water inlet 3 is enclosed in the pack. Consequently the external end 3a of the water inlet is closed by the material that defines the inner volume of the pack. In the embodiment illustrated in Figure 1a a part of the beverage outlet - that is its external end 4a - is not enclosed in the pack.

This embodiment of the invention presents the advantage of providing packs with inlet and outlet that are not in the vicinity of each other. Actually according to this embodiment the inlet and the outlet are on different sides of the pack : the beverage outlet external end is below the bottom of the pack whereas the water inlet external end is at the lateral side of the pack. Such a configuration particularly avoids contamination of the means for injecting water by the beverage flowing out of the beverage outlet. Besides a beverage preparation machine providing simultaneously a water injector and a dispensing area at the bottom of the pack receiving area is more difficult to conceive and does not enable an optimisation of the different elements of the machine.

**Figure 2a** is a variant of the pack of Figure 1a wherein the insert 5 presents an L-shape and is placed in the corner of the inner volume of the pack. The beverage outlet 4 presents the same feature as in the pack of Figure 1a. The water inlet is positioned in the upper part of the L-shape insert. The internal shape of the water inlet is illustrated in **Figure 2b** that is view of the insert 5 according to section C-C. The external end 3a of the water inlet comprises an inlet chamber 32 that is closed by the material that defines the inner volume of the pack. The chamber presents a essentially horizontal evacuation hole 31 in its lateral wall so as to orient the water flow, preferably in the form of a jet, in the inner volume 2 inside the plane P.

Although Figures 1a, b, c and 2a, b illustrates packs with single insert 5, packs can be made with different inserts for the water inlet 3 and for the beverage outlet 4 as illustrated in Figures 3a, 3b, 3c and Figures 4a, 4b.

**Figure 3a** presents the same features as the pack of Figure 1a except that the single insert 5 is replaced by two inserts 5a, 5b, one comprising the beverage outlet 4 and one comprising the water inlet 3. The internal designs of the beverage outlet 4 and the water inlet 3 are identical to those of the beverage outlet 4 and the water inlet 3 of Figure 1a, as illustrated in cross sections of the inserts 5b and 5a according to BB and AA respectively in **Figures 3b and 3c** respectively.

Similarly **Figure 4a** presents the same features as the pack of Figure 2a except that the single insert 5 is replaced by two inserts 5a, 5b, one comprising the beverage outlet 4 and one comprising the water inlet 3. The insert 5a for the beverage outlet is identical to the insert of Figure 3a and presents the same internal design as illustrated in Figure 3c. **Figure 4b** is the cross section of the insert 5b of the water inlet 3 according to CC and illustrates the internal design of the water inlet inside the insert.

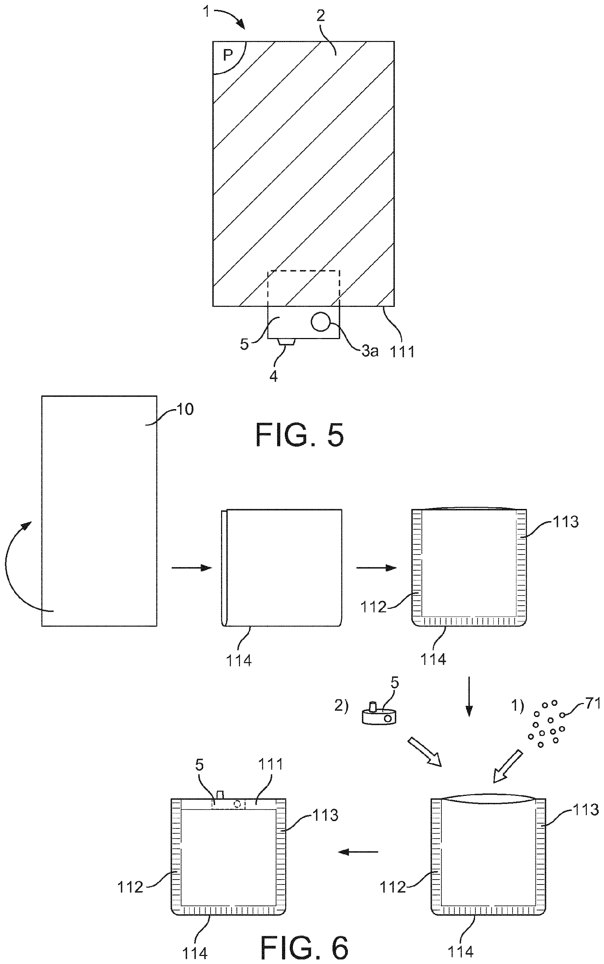

Whatever the type of insert in the packs, the packs can be configured so that the external end 3a of the water inlet is not closed by the sheet of material that creates and designs the inner volume 2 of the pack. This embodiment can be due to the fact that the external end 3a of the water inlet is closer to the bottom of the insert and/or because the sheet of material does not cover the full surface of the insert 5, for example the bottom edge 111 of the sheet does not cover the lower part of the insert or presents a notch that does not cover the water inlet external end. **Figure 5** schematically illustrates such an embodiment wherein only the top part of the single insert 5 is positioned between and covered by two joined bottom edges 111 of the sheets of material. The external end 3a of the water inlet is not covered.

**Figure 6** illustrates a method for manufacturing a pack according to the invention from a flexible sheet of material. First the sheet of material 10 that preferably presents a rectangular shape is folded in its middle and the superposed lateral edges are bonded together which creates pouch with bonded lateral edges 112, 113 and a folded edge 114. The folded edge 114 can also eventually be sealed to give a comparable aspect as the lateral edges for aesthetic aspect. Then food or beverage ingredient 7 is introduced in the pouch. Then the single insert 5 is placed between the two last opened edges and these edges are bonded together and around the insert to simultaneously close the pack, position the insert and close the water inlet. According to a less preferred embodiment the inserts of the beverage outlet and the water inlet can be separated.

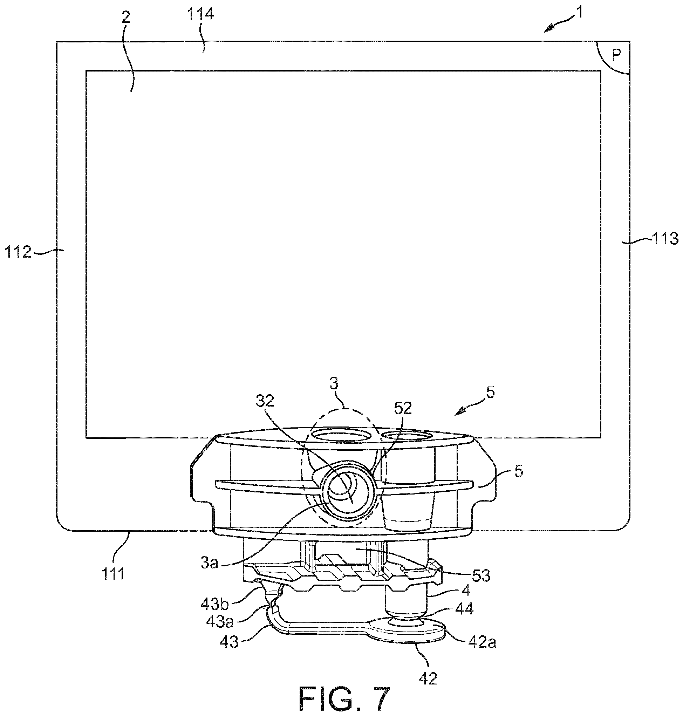

**Figure 7** illustrates a pack according one preferred embodiment of the invention. In this illustration the bottom middle part of the inner volume 2 has been made transparent to make the insert 5 apparent. The pack is preferably a planar sachet : it is oriented along a plane P essentially vertically oriented during beverage production. inner volume 2 is made of flexible material sheet material. The sheet material is bonded on its edges 112, 113, 111 to define the inner volume 2. The bottom bonded edge 13 includes the single insert 5 : the fins 51 and the raising edge 52 around the water inlet 3 on the lateral sides of the insert improves the adhesion with the flexible material sheet during sealing.

The insert 5 is a single piece of material preferably of plastic. It includes simultaneously a water inlet 3 for introducing water in the inner volume and a beverage outlet 4 for dispensing the beverage or food issued from the mixing of the food or beverage ingredient with water.

The water inlet 3 presents at its external end 3a an inlet chamber 32. This chamber is a hollow cavity ; it is globally horizontally oriented, that is perpendicularly to the plane P. Its dimensions are configured for receiving the hollow needle of a beverage preparation machine in order to inject water. The inlet chamber presents an evacuation end in its upper lateral wall : this evacuation end corresponds to an injection hole 31 (illustrated in Figures 5 and 6) from which water can be injected in the inner volume 2. Due to the configuration of the water inlet the water can be injected essentially horizontally at its external end 3a and, for example, essentially vertically in the inner volume 2 of the pack.

The invention is not limited to this particular design of the water inlet. For example **Figure 8** illustrates a single insert 5 wherein the inlet chamber 32 comprises two evacuation ends 31 in its side wall. As a consequence with such an insert water can be introduced in the inner volume of the pack essentially horizontally. In such an insert a part of the walls of the inlet chamber is defined by the sheet material covering the insert.

Whatever the type of embodiment for the insert, the beverage outlet is an essentially vertical pipe in the insert. It preferably presents a diameter for dispensing the beverage under free flow. The beverage outlet is preferably closed at its external end by a plug 42. This plug is preferably made of one piece with the rest of the insert.

In the preferred illustrated embodiment the beverage outlet 4 is a pipe and the plug 42 is attached to the end of the pipe. The connection 44 between the pipe and the plug 42 presents a smaller section than the plug upper surface 42a and smaller than the pipe section. This connection creates a weakening narrow zone near the plug 42 so that said plug can be made easy to cut or to tear.

The pack comprises a plastic bond 43 for maintaining the plug 42 attached to the pack after removing of the plug from the beverage outlet. Consequently it avoids that the plug falls in the beverage during its production. This bond is made of one piece with the rest of the insert. The plastic bond 43 presents a notch 43a positioned close to the point 43b of attachment of the bond to the single insert. This notch enables an easy bending of the bond it guarantees that the plug 42 detached from the beverage outlet remains away from the beverage outlet and not under the beverage outlet.

The inserts 5 of Figures 7 and 8 comprise a centring hole 53 extending essentially perpendicularly to the generally plane (P) shape of the inner volume and through the insert. It is configured for cooperating with the centring and immobilization device of the beverage preparation machine.

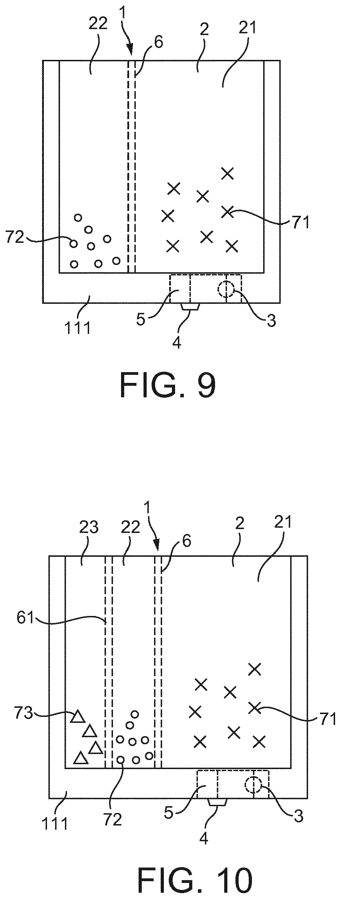

**Figure 9** illustrates the inner volume 2 of a pack according to Figure 1a. The inner volume includes two compartments 21, 22. These compartments store different beverage ingredients 71, 72. The first compartment 21 is separated from the second compartment 22 by one releasable or separable bond 6 extending from the bottom joined edges 111 of the sheets of material up to the top of the inner volume.

The water inlet and the water outlet 4 are positioned between two joined edges 111 so that they both establish fluid communication within the compartment 21 only.

**Figure 10** illustrates a pack comparable to the pack of Figure 9 except that the inner volume comprises a third compartment 23 separated from the second compartment 22 by one releasable or separable bond 61 extending from the bottom joined edges 111 of the sheets of material up to the top of the inner volume. The third compartment 23 stores a third ingredient 73 different from the second ingredient 72. Eventually the first ingredient 71 can be the same as the third ingredient 73.

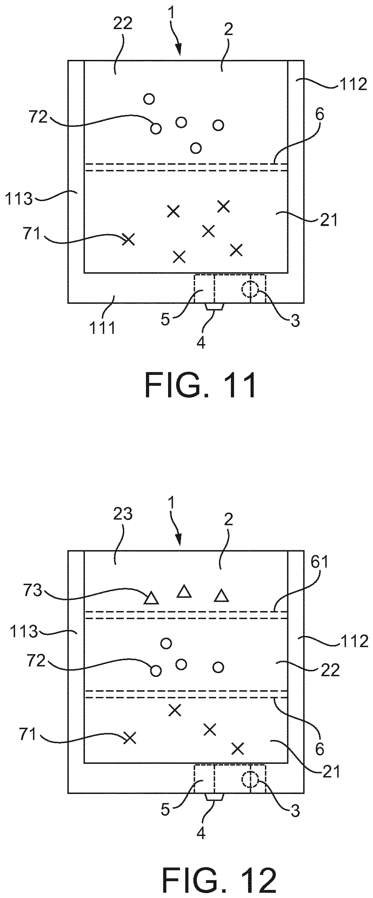

**Figure 11** illustrates the inner volume 2 of a pack according to Figure 1a. The inner volume includes two compartments 21, 22. These compartments store different beverage ingredients 71, 72. The first compartment 21 is separated from the second compartment 22 by one releasable or separable bond 6 extending between the lateral joined edges 112, 113 of the sheets of material.

The water inlet and the water outlet 4 are positioned between two joined edges 111 so that they both establish fluid communication within the compartment 21 only.

**Figure 12** illustrates a pack comparable to the pack of Figure 11 except that the inner volume comprises a third compartment 23 separated from the second compartment 22 by one releasable or separable bond 61 extending between the lateral joined edges 112, 113 of the sheets of material. The third compartment 23 stores a third ingredient 73 different from the second ingredient 72. Eventually the first ingredient 71 can be the same as the third ingredient 73.

**Figure 11** illustrates the inner volume 2 of a pack according to Figure 1a. The inner volume 2 stores a first ingredient 71 and includes an insert 72 freely movable inside the inner volume 2. The insert stores a second ingredient 72. The bound of the insert is made of one releasable or separable bond 6.

Although all Figures 9 to 13 are illustrated with the insert of the water inlet and the beverage outlet such as described in Figure 1a, other inserts of Figures 1b to 8 can be used according to the embodiments of the inner volume of Figures 9 to 13.

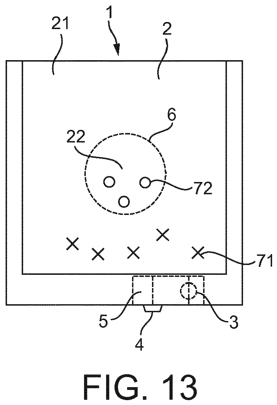

**Figure 13** illustrates the interaction of a pack 1 according to the present invention with a beverage preparation machine 8 according to the present invention. The machine comprises at least:
- a water tank 84,
- a heater 83 for heating water,
- a bypass line 87 for delivering ambient water,
- a valve (not illustrated) for the selection of either hot or ambient water,
- a pump 82 for pumping water. The pump can deliver water at a pressure comprised between 2 and 10 bar.
- a water nozzle or needle 81 for injecting water in the water inlet of the pack 1.

Preferably the machine comprises a drip tray 86 on which a drinking cup 9 can be positioned under the beverage outlet of the pack when a beverage is prepared.

The machine comprises an area (not illustrated) for receiving the pack that is configured so that the pack 1 is positioned with the single insert positioned at the bottom of the pack. The pack can be well centred and immobilised in the receiving area by a rod (not illustrated) configured for sliding in the centring hole 53 of the single insert (illustrated in Figures 4, 5, 6).

Preferably the pack is not pressurized during the beverage preparation. This effect can be obtained by opening the beverage outlet before water is introduced in the pack or simultaneously to the introduction of the water in the pack or a little bit after the introduction of the water in the pack. Consequently globally the beverage is prepared with the both water inlet and beverage outlet being opened. The opening of the water inlet is usually made by a needle 81 for introducing water. As for the beverage outlet it can be opened by the machine when the pack is placed inside or by the user manually. The illustrated machine comprises a beverage outlet opening means 85, for example a cutter for removing the plug 42 of the beverage outlet of the pack 1 when the pack presents a plug at the beverage outlet. The cutter 85 can be positioned so that the plug of the beverage outlet is automatically cut when the pack is introduced in the machine or when the beverage preparation is activated.

The present invention presents the advantage of proposing a range of packs for producing different beverages presenting various textures and aspects.

The present invention presents the advantage of proposing a range of packs for producing the same beverage (for example coffee) with different textures and aspects (for example flat or foamed).

## Claims

1. A pack (1) with an inner volume (2) in which at least two different food or beverage ingredients (71, 72) are stored and in which a beverage is produced when water is introduced inside,
said inner volume (2) being defined by sheets of material (10) joined to one another at their edges and said inner volume (2) presenting a generally plane shape defining a plane (P) vertically oriented during beverage production,
said pack comprising at least one inlet (3) for introducing water in the inner volume and at least one outlet (4) for delivering the beverage from said inner volume, said water inlet and said beverage outlet being positioned at the bottom of the pack and being at least partially positioned between two joined edges of the sheets of material (10),
wherein the inner volume (2) includes a plurality of compartments (21, 22), the the at least one water inlet (3) and the at least one water outlet (4) being positioned between two joined edges of the sheets of material so that they both establish fluid communication within the same compartment,
**characterized in that**
the compartments (21, 22) are separated by at least one releasable or separable bond (6).

2. A pack according to Claim 1 wherein the inner volume includes a plurality of compartments, said compartments being separated by at least one releasable or separable bond extending across the inner volume between two parts of the joined edges of the sheets of material.

3. A pack according to Claim 1 wherein at least one of the compartments (22) is an insert, said insert being freely movable inside the inner volume (2).

4. A pack according to any one of the precedent claims wherein at least one releasable or separable bond (6) is made of a water dissolvable material.

5. A pack according to any one of the precedent claims wherein at least one releasable or separable bond (6) is configured for breaking under pressure.

6. A pack according to any one of the precedent claims the external end (3a) of the water inlet (3) being oriented essentially perpendicularly to the plane (P) defined by the inner volume (2), and the beverage outlet (4) being a tube extending essentially vertically from the inner volume (2),

7. A pack according to any one of the precedent claims wherein the pack comprises one single insert including the water inlet and the beverage outlet, said single insert being positioned at the bottom of the pack and being partially positioned between two joined edges of the sheets of material.

8. A pack according to any one of the precedent claims wherein the water inlet is configured for producing a jet of water in the inner volume, said jet exerting a pressure on the at least one releasable or separable bond.

9. A method for the preparation of a food or beverage comprising the steps of:
- providing a pack (1) according to any one of claims 1 to 8 and positioning said pack with the inlet and the outlet positioned downwardly,
- injecting water into the pack to mix with the food or beverage ingredient,
- allowing the prepared beverage to escape through the outlet into a receptacle.

10. A method according to Claim 9 wherein it comprises one short step of externally exerting a pressure on the pack in order to break the at least one releasable or separable bond.

## Patentansprüche

1. Packung (1) mit einem Innenvolumen (2), in dem mindestens zwei verschiedene Nahrungsmittel- oder Getränkeinhaltsstoffe (71, 72) aufbewahrt werden, und in dem ein Getränk erzeugt wird, wenn Wasser darin eingebracht wird,
wobei das Innenvolumen (2) durch Materialfolien (10) definiert ist, die an ihren Kanten miteinander verbunden sind, und wobei das Innenvolumen (2) eine im Allgemeinen ebenflächige Form aufweist, die eine Ebene (P) definiert, die während der Getränkeerzeugung vertikal ausgerichtet ist,
wobei die Packung mindestens einen Einlass (3) zum Einleiten von Wasser in das Innenvolumen und mindestens einen Auslass (4) zur Abgabe des Getränks von dem Innenvolumen umfasst, wobei der Wassereinlass und der Getränkeauslass an der Unterseite der Packung angeordnet sind und mindestens teilweise zwischen zwei verbundenen Rändern der Materialfolien (10) positioniert sind,
wobei das Innenvolumen (2) eine Vielzahl von Kammern (21, 22) einschließt, wobei der mindestens eine Wassereinlass (3) und der mindestens eine Wasser: auslass (4) zwischen zwei verbundenen Kanten der Materialfolien so positioniert sind, dass sie beide in derselben Kammer eine Fluidverbindung herstellen,
**dadurch gekennzeichnet, dass**
die Kammern (21, 22) durch mindestens eine lösbare oder trennbare Bindung (6) getrennt sind.

2. Packung nach Anspruch 1, wobei das Innenvolumen eine Vielzahl von Kammern einschließt, wobei die Kammern durch mindestens eine lösbare oder trennbare Bindung getrennt sind, die sich über das Innenvolumen zwischen zwei Teilen der verbundenen Kanten der Materialfolien erstreckt.

3. Packung nach Anspruch 1, wobei mindestens eine der Kammern (22) ein Einsatz ist, wobei der Einsatz innerhalb des Innenvolumens (2) frei beweglich ist.

4. Packung nach einem der vorhergehenden Ansprüche, wobei mindestens eine lösbare oder trennbare Bindung (6) aus einem wasserlöslichen Material hergestellt ist.

5. Packung nach einem der vorhergehenden Ansprüche, wobei mindestens eine lösbare oder trennbare Bindung (6) zum Lösen unter Druck konfiguriert ist.

6. Packung nach einem der vorhergehenden Ansprüche, wobei das äußere Ende (3a) des Wassereinlasses (3) im Wesentlichen senkrecht zu der durch das Innenvolumen (2) definierten Ebene (P) ausgerichtet ist und der Getränkeauslass (4) ein sich im Wesentlichen vertikal vom Innenvolumen (2) erstreckendes Rohr ist.

7. Packung nach einem der vorhergehenden Ansprüche, wobei die Packung einen einzelnen Einsatz umfasst, der den Wassereinlass und den Getränkeauslass einschließt, wobei der einzelne Einsatz am Boden der Packung angeordnet ist und sich teilweise zwischen zwei verbundenen Rändern der Materialfolien befindet.

8. Packung nach einem der vorhergehenden Ansprüche, wobei der Wassereinlass zum Erzeugen eines Wasserstrahls in dem Innenvolumen konfiguriert ist, wobei der Strahl einen Druck auf die mindestens eine ablösbare oder trennbare Bindung ausübt.

9. Verfahren zum Zubereiten eines Nahrungsmittels oder Getränks, folgende Schritte umfassend:
- Bereitstellen einer Packung (1) nach einem der Ansprüche 1 bis 8 und Anordnen der Packung, sodass der Einlass und der Auslass nach unten weisen,
- Einspritzen von Wasser in die Packung zum Vermischen mit dem Nahrungsmittel- oder Getränkeinhaltsstoff,
- Zulassen, dass das zubereitete Getränk durch den Auslass in einen Behälter austritt.

10. Verfahren nach Anspruch 9, wobei es einen kurzen Schritt des externen Ausübens eines Drucks auf die Packung umfasst, um die mindestens eine lösbare oder trennbare Bindung zu lösen.

## Revendications

1. Conditionnement (1) avec un volume interne (2) dans lequel au moins deux ingrédients d'aliment ou de boisson différents (71, 72) sont stocké et dans lequel une boisson est produite lorsque de l'eau est introduite à l'intérieur,
ledit volume interne (2) étant défini par des feuilles de matériau (10) jointes l'une à l'autre au niveau de leurs bords et ledit volume interne (2) présentant une forme globalement plane définissant un plan (P) orienté verticalement pendant la production de boisson,
ledit conditionnement comprenant au moins une entrée (3) pour introduire de l'eau dans le volume interne et au moins une sortie (4) pour distribuer la boisson à partir dudit volume interne, ladite entrée d'eau et ladite sortie de boisson étant positionnées au fond du conditionnement et étant au moins partiellement positionnées entre deux bords joints des feuilles de matériau (10),
dans lequel le volume interne (2) inclut une pluralité de compartiments (21, 22), ladite au moins une entrée d'eau (3) et ladite au moins une sortie d'eau (4) étant positionnées entre deux bords joints des feuilles de matériau de sorte qu'elles établissent l'une et l'autre une communication fluidique au sein du même compartiment,
**caractérisée en ce que**
les compartiments (21, 22) sont séparés par au moins une liaison libérable ou séparable (6).

2. Conditionnement selon la revendication 1, dans lequel le volume interne inclut une pluralité de compartiments, lesdits compartiments étant séparés par au moins une liaison libérable ou séparable s'étendant à travers le volume interne entre deux parties des bords joints des feuilles de matériau.

3. Conditionnement selon la revendication 1, dans lequel au moins l'un des compartiments (22) est un insert, ledit insert étant libre de se mouvoir à l'intérieur du volume interne (2).

4. Conditionnement selon l'une quelconque des revendications précédentes, dans lequel au moins une liaison libérable ou séparable (6) est constituée d'un matériau soluble dans l'eau.

5. Conditionnement selon l'une quelconque des revendications précédentes, dans lequel au moins une liaison libérable ou séparable (6) est configurée pour se rompre sous pression.

6. Conditionnement selon l'une quelconque des revendications précédentes, l'extrémité externe (3a) de l'entrée d'eau (3) étant orientée de façon essentiellement perpendiculaire au plan (P) défini par le volume interne (2), et la sortie de boisson (4) étant un tube s'étendant de façon essentiellement verticale par rapport au volume interne (2),

7. Conditionnement selon l'une quelconque des revendications précédentes, dans lequel le conditionnement comprend un insert unique incluant l'entrée d'eau et la sortie de boisson, ledit insert unique étant positionné au fond du conditionnement et étant partiellement positionné entre deux bords joints des feuilles de matériau.

8. Conditionnement selon l'une quelconque des revendications précédentes, dans lequel l'entrée d'eau est configurée pour produire un jet d'eau dans le volume interne, ledit jet exerçant une pression sur ladite au moins une liaison libérable ou séparable.

9. Procédé de préparation d'un produit alimentaire ou d'une boisson comprenant les étapes consistant à :
- fournir un conditionnement (1) selon l'une quelconque des revendications 1 à 8 et positionner ledit conditionnement avec l'entrée et la sortie positionnées vers le bas,
- injecter de l'eau dans le conditionnement pour la mélanger avec l'ingrédient d'aliment ou de boisson,
- laisser la boisson préparée s'échapper à travers la sortie dans un réceptacle

10. Procédé selon la revendication 9, dans lequel il comprend une étape courte consistant à exercer de façon externe une pression sur le conditionnement afin de rompre ladite au moins une liaison libérable ou séparable.
